Europäisches Patentamt

European Patent Office

Office européen des brevets

(11) Veröffentlichungsnummer: **0 433 652 A2**

# (12) EUROPÄISCHE PATENTANMELDUNG

(21) Anmeldenummer: 90121750.5

(22) Anmeldetag: 14.11.90

(51) Int. Cl.⁵: **G01H 3/00**

(30) Priorität: 22.12.89 DE 3942588

(43) Veröffentlichungstag der Anmeldung:
26.06.91 Patentblatt 91/26

(84) Benannte Vertragsstaaten:
**DE FR GB NL**

(71) Anmelder: **KRUPP ATLAS ELEKTRONIK GMBH**
**Postfach 44 85 45 Sebaldsbrücker**
**Heerstrasse 235**
**W-2800 Bremen 44(DE)**

(72) Erfinder: **Arens, Egidius, Dipl.-Ing.**
**Cordstrasse 13**
**W-2807 Achim(DE)**

(54) Verfahren und Vorrichtung zum Ausgleichen von Empfindlichkeitsstreuungen.

(57) Hydrophone bzw. Hydrophongruppen, sogenannte Staves, die in Wandleranordnungen verwendet werden, sowie die zugehörigen Vorverstärker weisen Streuungen der Empfindlichkeit und der Verstärkung auf, so daß die mit diesen Empfangssignalen erfolgende Richtungsbildung fehlerhaft wird.

Deshalb werden die Energiewerte jedes Hydrophons bzw. Staves bestimmt und daraus ein mittlerer Energieverlauf durch Regression oder Approximation ermittelt. Aus dem Vergleich der Energiewerte mit dem Energieverlauf ergibt sich ein Korrekturwert, mit dem die Empfangssignale korrigiert, d.h. optimiert werden.

Eine dieses Verfahren realisierende Vorrichtung ist insbesondere bei der Signalverarbeitung sonartechnischer Anlagen einsetzbar.

Fig. 1

## VERFAHREN UND VORRICHTUNG ZUM AUSGLEICHEN VON EMPFINDLICHKEITSSTREUUNGEN

Die Erfindung betrifft ein Verfahren zum Ausgleichen von Empfindlichkeitsstreuungen nach dem Oberbegriff des Anspruchs 1 und eine Vorrichtung zum Ausüben des Verfahrens.

Ein derartiges Verfahren ist beispielsweise der US-PS 4 090 169 entnehmbar. Dabei werden Betriebsdaten der Hydrophone bzw. Hydrophongruppen, sogenannte Staves, in einer speziellen Meßvorrichtung bestimmt, bei der ein Sendewandler in definiertem Abstand unmittelbar dem zu vermessenden Hydrophon gegenüber positioniert wird. Die Phasen und Amplituden der Hydrophone werden dann aufgrund des Sendesignals relativ zueinander vermessen und an externen Kalibriermitteln so aneinander angeglichen, daß bei einer ebenen Welle für vorherbestimmte Frequenzen die Empfangssignale der Hydrophone gleiche Amplituden und Phasen aufweisen. Ein derartiges Verfahren setzt aufwendige, spezielle Meßeinrichtungen voraus und erlaubt eine Kalibrierung der Hydrophone nur unter den durch den Eichaufbau vorgegebenen Bedingungen. Zusätzliche Veränderungen der Betriebsdaten, wie sie durch den Betriebseinbau eines Hydrophons oder einer Hydrophongruppe erfolgen können, werden naturgemäß nicht erfaßt und somit auch nicht korrigiert.

Der Erfindung liegt die Aufgabe zugrunde, Empfindlichkeitsstreuungen von Hydrophonen bzw. Staves während des Betriebes zu ermitteln und unmittelbar auszugleichen und dadurch die Richtcharakteristik der Wandleranordnungen zu verbessern, die mit diesen Hydrophonen bzw. Staves bestückt sind.

Diese Aufgabe wird durch das im Kennzeichenteil des Anspruchs 1 angegebene Verfahren gelöst.

Für Wandleranordnungen ist ein sorgfältiger Abgleich der Betriebsparameter der Hydrophone bzw. Staves, das sind z. B. zu Gruppen zusammengefaßte vertikal angeordnete Hydrophone, erforderlich. Denn jegliche Streuungen wirken sich unmittelbar auf die Nebenzipfeldämpfungen der Richtcharakteristik der Wandleranordnung aus. Erst wenn die Richtungsbildung mit Empfangssignalen gemacht wird, die im Idealfall keine Phasen- oder Amplitudenfehler enthalten, kann gute Bündelung und optimale, die theoretischen Grenzwerte erreichende Nebenpegeldämpfung erwartet werden.

Das Empfangssignal eines Hydrophons bzw. Staves, dessen Energie am Ausgang der Vorverstärkerstufe ggf. nach A/D-Wandlung bestimmt werden kann, setzt sich aus einem Störanteil $W_N$ und einem Signalanteil $W_S$ zusammen. Dabei ist der Signalanteil $W_S$ zusätzlich durch die Eigenrichtwirkung $R(\vartheta)$ der Basis beeinflußt. Die sich aus diesen Signalanteilen ergebenden Empfangssignale sind von der Empfindlichkeit $E_{Ei}$ der Hydrophone bzw. der Hydrophongruppen und dem Verstärkungsfaktor $V_i$ der Vorverstärker abhängig. Damit läßt sich die Energie $W_i$ des Empfangssignals für jedes Hydrophon bzw. Stave beschreiben zu:

$$W_i = V_i^2 \cdot E_{Ei}^2 \, (W_N + W_S \cdot R^2(\vartheta_s - \vartheta_i)) \qquad (1)$$

Dabei gibt $\vartheta_S$ die Einfallsrichtung des Empfangssignals und $\vartheta_i$ die Richtung des entsprechenden Hydrophons bzw. Staves an.

Der durch die Empfindlichkeit $E_{Ei}$ und die Verstärkung $V_i$ gekennzeichnete Teil der Gleichung (1) kann auch als sich aus einem bekannt anzusehenden Anteil $V_b$ und einem Anteil $\Delta_i \cdot V_b$ zusammengesetzt angenommen werden, der die Empfindlichkeitsstreuung der Hydrophone und die Verstärkungsänderung berücksichtigt, und durch nachfolgende Gleichung beschrieben wird:

$$V_i^2 \cdot E_{Ei}^2 = V_b \cdot (1 + \Delta_i) \qquad (2)$$

Der bekannte Term $V_b$ muß dann entweder vorgegeben sein, ergibt sich unmittelbar aus dem Produkt der mittleren Verstärkung mit der Empfindlichkeit oder wird - wie nachfolgend gezeigt - als im Mittelwert des Energieverlaufs $W_i(\vartheta)$ enthalten angenommen und dann bei der Ermittlung der Faktoren durch orthogonale Transformation in die Koeffizienten einer Reihenentwicklung mit einbezogen.

Denn entwickelt man gemäß Gl. (1) die Energie $W_i$ der Wandleranordnung in eine Reihe orthogonaler Funktionen, wobei sich für die Zylinderbasis die Fourierreihe anbietet, so läßt sich für jedes Stave der folgende Zusammenhang angeben:

$$W_i = (1 + \Delta_i) \cdot (A_o + A_1 \cos \vartheta_i + A_2 \cos 2\vartheta_i + \ldots$$
$$B_1 \sin \vartheta_i + B_2 \sin 2\vartheta_i + \ldots) \qquad (3)$$

Dabei sind die Koeffizienten $A_0$, $A_1$, $A_2$, ... und $B_1$, $B_2$, ... die Reihenkoeffizienten, hier die Fourierkoeffizienten.

Aus der vorstehenden Gleichung läßt sich der Korrekturwert $K_i$ für jedes Hydrophon bzw. jedes Staves nunmehr unmittelbar bestimmen zu:

$$K_i = (1 + \Delta_i)^{-\frac{1}{2}} = \left( \frac{W_i}{A_o + A_1 \cos \vartheta_i + \ldots + B_1 \sin \vartheta_i + \ldots} \right)^{-\frac{1}{2}} \qquad (4)$$

Bei der Vielzahl der Energiewerte, die für alle Hydrophone der Wandleranordnung gemessen werden, ergeben sich üblicherweise mehrfache Lösungen für die Koeffizienten. Damit können besonders vorteilhaft Ausgleichsrechenverfahren oder Schätzverfahren, z. B. die Regressionsrechnung, angewendet und die Streuung der Koeffizienten weiter ausgeglichen werden, um den Korrekturwert $K_i$ aufgrund der Gesamtheit der Meßergebnisse zu optimieren.

Das erfindungsgemäße Verfahren hat den Vorteil, daß die Streuung der Hydrophonempfindlichkeit im eingebauten Betriebszustand ermittelt und ausgeglichen wird. Es müssen keine aufwendigen Ausbaumaßnahmen durchgeführt und auch keine Vergleichsmessungen angestellt werden, um alle Hydrophone einer Anordnung zu kalibrieren und aneinander anzugleichen. Es ist ferner kein zusätzlicher Sendegenerator für den Meßaufbau notwendig, da im Betrieb die Empfangssignale unmittelbar zur Kalibrierung benutzt werden. Ein wesentlicher Vorteil der Erfindung ist deshalb, daß die Veränderungen der Betriebsparameter durch Alterung, Temperatur oder andere Umwelteinflüsse unmittelbar während jedes Meßvorgangs erfaßt und ausgeglichen werden, daß also keine besonderen Testbedingungen geschaffen werden müssen.

Das erfindungsgemäße Verfahren wird auch vorteilhaft durch Anspruch 2 weitergebildet. Durch die zeitliche Mittelung der Energiewerte ergibt sich bereits auf einfache Weise ein weitgehend stetiger Energieverlauf, der noch weiter durch die Regression, d.h. eine Ausgleichsrechnung in der Reihenfolge der Hydrophone bzw. Staves, geglättet wird.

Das erfindungsgemäße Verfahren wird auch vorteilhaft durch die Ansprüche 3 bis 5 weitergebildet. Denn Transformationskerne linearer Transformationen, die weitgehend an den zu approximierenden Energieverlauf angepaßt sind, bewirken bereits mit wenigen Elementen einen approximierten mittleren Energieverlauf mit geringem Fehler. So ist es vorteilhaft, z. B. für zylindrische Wandleranordnungen zur Approximation des periodischen Energieverlauf in der Reihenfolge der Hydrophone bzw. Staves die Transformationskerne der Fourier-Transformation, d.h. die Kreisfunktionen, und für Längsantennen die Legendre-Polynome zu verwenden.

Das erfindungsgemäße Verfahren wird auch vorteilhaft durch Anspruch 6 weitergebildet. Durch die Bildung eines Korrekturwerts als eine Differenz des Energiewertes zum mittleren Energieverlauf erfolgt die nachgeschaltete Signalverarbeitung, die dann nicht mit Empfangssignalen, sondern Energiewerten durchgeführt wird, auf der Grundlage des verbesserten, ausgeglichenen Energieverlaufs. D.h., der Signalverarbeitung werden optimale Energiesignale zugrunde gelegt.

Weitere vorteilhafte Ausgestaltungen des erfindungsgemäßen Verfahrens ergeben sich auch aus den Ansprüchen 7 bis 8.

Eine vorteilhafte Vorrichtung zur Ausübung des erfindungsgemäßen Verfahrens ergibt sich aus Anspruch 9. Dabei werden die Korrekturwerte in einfacher Weise in einem parallelen Schaltungszweig zu der Verbindung zwischen den Vorverstärkern und der nachgeschalteten Signalverarbeitungseinrichtung ermittelt.

Die Vorrichtung wird auch durch den Anspruch 13 vorteilhaft weitergebildet. Dabei werden die Korrekturwerte bereits im Korrekturrechner derart bestimmt, daß sie mit den Koeffizienten des Koeffizientenmultiplizierers im Richtungsbildner additiv oder multiplikativ kombiniert werden. Auf diese Weise ist eine Vereinfachung der Vorrichtung durch Einsparung eines Multiplizierers vor der Signalverarbreitung erreichbar.

Die Vorrichtung wird auch durch Anspruch 14 vorteilhaft weitergebildet. Derartige extreme Korrekturwerte treten immer dann auf, wenn Hydrophone oder Verstärker ausgefallen sind. Durch das Sperren der vollständig verfälschten Empfangssignale wird die Signalverarbeitung verbessert und nicht unnötig mit "Ausreißern" belastet.

Ein Ausführungsbeispiel der Erfindung wird anhand der Zeichnung nachstehend beschrieben.

Es zeigen:

Fig. 1    einen Energieverlauf und Energiewerte einer zylindrischen Wandleranordnung,

Fig. 2    ein Blockschaltbild zum Bestimmen von Korrekturwerten aus Staves-Signalen.

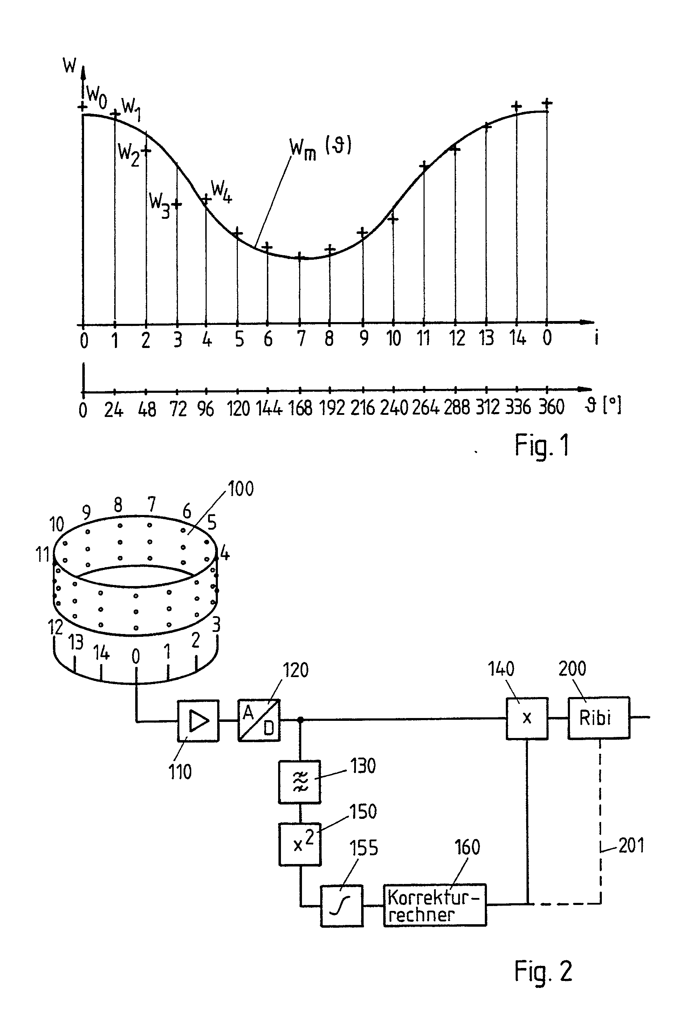

In Fig. 1 sind die Energiewerte $W_i$ und ein mittlerer Energieverlauf $W_m(\vartheta)$ für eine zylindrische Wandleranordnung dargestellt. Der Einfachheit halber ist eine Wandleranordnung mit fünfzehn Hydrophonen bzw. Staves vorgegeben, die mit den Indizes $i = 0$ bis 14 auf der Abszissenachse bezeichnet sind. Es ist außerdem eine zweite völlig gleichwertige Abszissenbezeichnung angegeben, die mit Richtungswinkeln $\vartheta$ bezeichnet ist, also bezüglich einer $0°$-Richtung der Basis - das ist die Ausrichtung des Hydrophons 0 - mit entsprechenden azimutalen Richtungen der einzelnen Hydrophone bzw. Staves bezeichnet ist. Bezüglich der Ordinate ist - ohne im einzelnen skaliert zu sein - die Energie W der Empfangssignale der Hydrophone bzw. Staves aufgetragen. Die Meßwerte der Energie $W_i$ für jedes Hydrophon sind durch Kreuze gekennzeichnet und es ist ein mittlerer Energieverlauf $W_m$ als Funktion der azimutalen Richtung $\vartheta$ angegeben, der sich beispielsweise durch Regression, d.h. durch ein Ausgleichsrechenverfahren, zwischen den Energiewerten $W_i$ ergeben hat. Die Abweichungen der gemessenen Energiewerte $W_i$ vom mittleren Energieverlauf $W_m(\vartheta)$ kommen durch Empfindlichkeitsstreuungen der Hydrophone und/oder durch Verstärkerfehler zustande. Mit dem aus dem mittleren Energieverlauf $W_m(\vartheta)$ für jedes Stave i bestimmbaren Funktionswert $W_{mi}$ liegt damit ein Vergleichswert zu jedem aus Messungen ermittelten Energiewert $W_i$ vor.

Ein Korrekturwert ist nun einfach aus der Quadratwurzel des Quotienten $W_{mi}/W_i$, d.h. aus dem Funktionswert $W_{mi}$ des Energieverlaufs für jedes Hydrophon bzw. Stave und dem Energiewert $W_i$, zu bestimmen und als Korrekturfaktor für das Empfangssignal der Staves anwendbar. Das mit einem solchen Korrekturwert multiplizierte und einem Richtungsbildner zugeführte Empfangssignal ist dann optimal geglättet und an den Energieverlauf $W_m(\vartheta)$ der Wandleranordnung angepaßt, so daß auch die Richtungsbildung nicht mit fehlerbehafteten Empfangssignalen durchgeführt wird und deshalb ebenfalls optimal ist.

Der dargestellte kosinusförmige mittlere Energieverlauf $W_m(\vartheta)$ macht deutlich, daß er ebenso durch eine Fourierreihe angenähert werden kann, wie in Gl. (3) angegeben. Dazu werden die Energiewerte $W_i$ einer FFT (Fast-Fourier-Transformation) unterzogen und die Fourierkoeffizienten $A_0$, $A_1$, $A_2$, ..., $B_1$, $B_2$ ..., der Fourierreihe bestimmt. Insbesondere dann, wenn die Energiewerte keine sehr großen Abweichungen vom mittleren Energieverlauf aufweisen, kann sich bei geeigneten FFT-Algorithmen bereits für wenige Koeffizienten eine hinreichend gute Annäherung an den idealen Energieverlauf $W_m(\vartheta)$ ergeben. Damit können dann die Korrekturwerte $K_i$ gemäß Gl. (4) bestimmt werden zu

$$K_i = \left(\frac{W_m(\vartheta_i)}{W_i}\right)^{\frac{1}{2}} = \left(\frac{(A_0 + A_1 \sin\vartheta_i + \ldots + B_1 \sin\vartheta_i + \ldots)}{W_i}\right)^{\frac{1}{2}}$$

Liegt hingegen eine Antennenanordnung vor, die langgestreckt, linienförmig ist, z.B. eine akustische Schleppantenne, so ist es sinnvoll, statt der Fourierreihe eine Reihe aus Legendre-Polynomen zu bilden und die entsprechenden Reihenkoeffizienten zu bestimmen. Der Energieverlauf der Längsantenne wird durch diese Legendre-Polynome

$$L_n(\vartheta) = \frac{1}{2^n n!} \cdot \frac{d^n[(\vartheta^2 - 1)^n]}{d\vartheta^n} \quad \text{mit } n = 0, 1, 2, \ldots, N$$

besser approximiert. An der grundsätzlichen Ermittlung der Korrekturkoeffizienten für die Empfangssignale der jeweiligen Hydrophone ändert sich dabei jedoch nichts.

In Fig. 2 ist das Blockschaltbild einer Vorrichtung zur Ausübung des erfindungsgemäßen Verfahrens angegeben. Eine Wandleranordnung 100 ist als Zylinderbasis dargestellt, die beispielhaft aus fünfzehn Staves aufgebaut ist. Die Staves sind in tangentialer Richtung vergleichbar den azimutalen Richtungen $\vartheta$, mit den Ziffern i = 0 bis 14 bezeichnet. Jedes Stave i, d.h. jede Hydrophongruppe, besteht aus drei vertikal übereinander angeordneten Hydrophonen, die zum Zwecke einer vertikalen Bündelung des Empfangssignals zusammengeschaltet sind. Die Ausgangssignale aller Staves i werden - wie im weiteren beschrieben - vollständig parallel in getrennten Signalverarbeitungsschaltungen weiterverarbeitet und erst bei der Richtungsbildung zusammengefaßt. Die entsprechenden Baugruppen sind also jeweils i-fach vorhanden, ohne daß das im einzelnen dargestellt werden muß.

Steht hingegen für die Verarbeitung der Stave-Signale ausreichend Zeit zur Verfügung, so ist durchaus eine einzelne Signalverarbeitungsvorrichtung realisierbar, die dann die Staves abtastet, die Stave-Signale im Multiplex verarbeitet und dem Richtungsbildner nacheinander zuführt.

In dem Beispiel gemäß Fig. 2 sind jeweils die Staves i mit dem jeweiligen Vorverstärker 110 verbunden, dem ein A/D-Wandler 120 nachgeschaltet ist. An den A/D-Wandler 120 ist ein Filter 130 zur Bandbegrenzung des für die Energiewertbestimmung benötigten Empfangssignals und ein erster Eingang eines Multiplizierers 140 angeschlossen. Dem Filter 130 sind eine Quadrierschaltung 150 und eine Integrierschaltung 155 zum Bilden der Energiewerte aus den Empfangssignalen jedes Staves i nachgeschaltet. Diese Energiewerte werden an einen Korrekturrechner 160 übertragen, in dem die Korrekturwerte $K_i$ jedes Staves i bestimmt und dem zweiten Eingang des Multiplizierers 140 zugeführt werden. Am Ausgang des Multiplizierers 140 steht damit ein mit einem für jedes Stave i typischen Korrekturwert $K_i$ multipliziertes Empfangssignal an, das einem Richtungsbildner 200 zugeführt wird.

Ohne daß es im einzelnen dargestellt werden muß, weist der Richtungsbildner 200 Verzögerungsschaltungen für die korrigierten Empfangssignale der Staves, Koeffizientenmultiplizierer zur verarbeitungsgerechten Bewertung der Stave-Signale und Summierschaltungen für die richtungsabhängig korrekt verzögerten und bewerteten Stave-Signale auf.

Bei der Funktionsweise der erfindungsgemäßen Vorrichtung wird davon ausgegangen, daß die Hydrophone in den Staves i der Wandleranordnung 100 zum einen aufgrund von Fertigungstoleranzen zum anderen durch Alterungs- oder Umwelteinflüsse in ihren Betriebsparametern besonders stark beeinflußbar sind. Sie weichen entweder von vornherein oder aber im Laufe der Zeit von den ursprünglich definierten Betriebsdaten ab. Gleiches gilt auch für die Vorverstärker 110, die häufig in unmittelbarer Nähe der Hydrophone bzw. Staves eingebaut sind und dabei erheblichen Temperatur- und Luftfeuchtigkeitsschwankungen unterliegen. Damit sind die Empfangssignale der Hydrophone bzw. Staves durch das Produkt Empfindlichkeit und Verstärkung unmittelbar beeinflußt. Insbesondere im Betrieb ist es daher erforderlich, die Signale zu korrigieren. Dazu wird das natürliche Dämpfungsverhalten der Wandleranordnung 100 genutzt, das z. B. bei einem aus der Richtung des Staves 0 empfangenen Signal einen prinzipiellen Energieverlauf $W_m(\vartheta)$, wie in Fig. 1 gezeigt, bewirkt. Weichen die Energiewerte $W_i$ von diesem mittleren optimalen Verlauf ab, wie insbesondere für den Energiewert $W_3$ dargestellt, so sind die Fehlerursachen überwiegend in Hydrophon und Vorverstärker zu erwarten. Da im Betrieb weder die Einfallsrichtung der Signale noch der aktuelle Signalpegel bekannt ist, muß der mittlere Energieverlauf $W_m$ erst aus den gemessenen Energiewerten $W_i$ bestimmt werden. Dazu werden die Signale quadriert und integriert. Im Korrekturwertrechner 160 ist aus diesen Energiewerten $W_i$ durch Anwendung einer orthogonalen Transformation, wie der Fourier-Transformation, eine Approximation des Energieverlaufs zu ermitteln. Dabei sind insbesondere dann, wenn die Transformation bereits gut an den erwarteten Verlauf angepaßt ist, nur wenige Transformationskoeffizienten für die Reihenentwicklung zu bestimmen. Als Ausgangssignal des Korrekturwertrechners 160 ergibt sich dann der Korrekturwert $K_i$ für das Stave i als Quadratwurzel aus dem Verhältnis des mittleren Energiewerts $W_{mi} = W_m(\vartheta_i)$ und dem empfangenen Energiewert $W_i$. mit dem das Empfangssignal im Multiplizierer 140 multipliziert wird. Im nachgeschalteten Richtungsbildner 200 erfolgt dann eine verbesserte Richtungsbildung mit von Empfindlichkeits- und Verstärkungsstreuungen befreiten Signalen.

Eine Vereinfachung der Vorrichtung gemäß dem in Fig. 2 dargestellten Ausführungsbeispiel ergibt sich, wenn der Multiplizierer 140 entfällt und der Ausgang des Korrekturwertrechners 160 - wie durch die gestrichelte Verbindung 201 dargestellt - unmittelbar mit dem Richtungsbildner 200 verbunden wird, so daß die Korrekturwerte unmittelbar mit den Multiplikationsfaktoren der Richtungsbildung verknüpft werden. Dann sind die Empfangssignale der Staves i nur einmal mit einem Faktor zu multiplizieren, der die Kriterien der Richtungsbildung und den Korrekturwert für Empfindlichkeitsstreuungen beinhaltet.

Der Korrekturwertrechner 160 kann auch ohne weiteres mit einer Schwellwertprüfeinrichtung ausgestattet sein, die extreme Korrekturwerte unterdrückt. Diese Maßnahme ist z. B. dann sinnvoll, wenn einzelne Staves oder Verstärker total ausgefallen sind. Die Energiewerte $W_i$ werden dann sehr klein und infolgedessen der Korrekturwert sehr groß. Ein solcher eine vorgebbare Schwelle überschreitender Korrekturwert kann dann als Abschaltkriterium für den Signalverarbeitungszweig des betreffenden Staves benutzt und auch bei

EP 0 433 652 A2

Signalverarbeitung des Richtungsbildners 200 ausgeschlossen werden.

**Ansprüche**

1. Verfahren zum Ausgleichen von Empfindlichkeitsstreuungen der Empfangssignale von Hydrophonen bzw. Staves, d.h. Hydrophongruppen, in Wandleranordnungen zwecks anschließender Signalverarbeitung, wie z.B. Richtungsbildung, wobei die Empfangssignale durch die Empfindlichkeit der Hydrophone bzw. Staves und/oder die Verstärkung von den Hydrophonen nachgeschalteten Vorverstärkern beeinflußt sind, dadurch gekennzeichnet,
   - daß ein Energiewert ($W_i$) des Empfangssignals jedes Hydrophons bzw. Staves ermittelt wird,
   - daß aus den Energiewerten ($W_i$) ein mittlerer Energieverlauf ($W_m(\vartheta)$) in Abhängigkeit von der Reihenfolge der Hydrophone bzw. Staves bestimmt wird,
   - daß für jedes Hydrophon bzw. Stave durch Vergleich des jeweiligen Energiewertes ($W_i$) mit dem Energieverlauf ($W_m(\vartheta)$) ein Korrekturwert gebildet wird und
   - daß die Empfangssignale mit dem Korrekturwert korrigiert werden.

2. Verfahren nach Anspruch 1, dadurch gekennzeichnet, daß das Bestimmen des mittleren Energieverlaufs ($W_m(\vartheta)$) durch zeitliche Mittelung der Energiewerte ($W_i$) für jedes Hydrophon bzw. Stave und durch anschließende Regression in Abhängigkeit von der Reihenfolge der Hydrophone bzw. Staves erfolgt.

3. Verfahren nach einem der Ansprüche 1 oder 2, dadurch gekennzeichnet, daß das Bestimmen des mittleren Energieverlaufs ($W_m(\vartheta)$) aus den Energiewerten ($W_i$) in der Reihenfolge der Hydrophone bzw. Staves angepaßt an die Geometrie der Wandleranordnung durch eine vorgebbare Anzahl von Elementen einer Reihe orthogonaler Funktionen erfolgt, und daß die Koeffizienten der Reihe durch lineare Transformation der Energiewerte ($W_i$) ermittelt werden.

4. Verfahren nach Anspruch 3, dadurch gekennzeichnet, daß bei einer zylindrischen Wandleranordnung (100) der mittlere Energieverlauf ($W_m(\vartheta)$) durch eine Fourierreihe bestimmt wird.

5. Verfahren nach Anspruch 3, dadurch gekennzeichnet, daß bei einer langgestreckten Wandleranordnung, z.B. einer Längsantenne, der mittlere Energieverlauf durch eine Reihe der Legendre-Polynome bestimmt wird.

6. Verfahren nach einem oder mehreren der Ansprüche 1 bis 5, dadurch gekennzeichnet, daß bei einer Signalverarbeitung der Energiewerte ($W_i$) der Korrekturwert für jedes Hydrophon bzw. Stave als die Differenz des Energiewertes ($W_i$) zum mittleren Energieverlauf ($W_m(\vartheta)$) gebildet und dem Energiewert ($W_i$) für jedes Hydrophon bzw. Stave hinzuaddiert wird.

7. Verfahren nach einem oder mehreren der Ansprüche 1 bis 5, dadurch gekennzeichnet, daß für jedes Hydrophon bzw. Stave der Korrekturwert ($K_i$) aus der Quadratwurzel des Verhältnisses vom Funktionswert des mittleren Energieverlaufs ($W_m(\vartheta)$) zum Energiewert ($W_i$) gebildet und daß jedes Empfangssignal mit dem Korrekturwert ($K_i$) multipliziert wird.

8. Verfahren nach einem oder mehreren der Ansprüche 1 bis 5, dadurch gekennzeichnet, daß der Korrekturwert ($K_i$) aus der Quadratwurzel des Wertes der Fourierreihe dividiert durch den Energiewert ($W_i$) gebildet wird und daß das Empfangssignal mit dem Korrekturwert ($K_i$) multipliziert wird.

9. Vorrichtung zum Ausüben des Verfahrens nach einem oder mehreren der Ansprüche 1 bis 8, dadurch gekennzeichnet, daß für jedes Hydrophon bzw. Stave einer Wandleranordnung (100) den Vorverstärkern (110) über eine erste Verbindung eine Quadrierschaltung (150) und eine Integrierschaltung (155) zum Bilden der Energiewerte ($W_i$) der Empfangssignale sowie ein Korrekturwertrechner (160) zum Bestimmen des mittleren Energieverlaufs ($W_m(\vartheta)$) und der Korrekturwerte ($K_i$) nachgeschaltet ist, daß die Korrekturwerte ($K_i$) an einen Eingang einer Multiplizierschaltung (140) übertragbar sind, daß die Vorverstärker (110) über eine zweite Verbindung mit einem weiteren Eingang der Multiplizierschaltung (140) zusammengeschaltet sind und daß an dem Ausgang der Multiplizierschaltung (140) die mit dem Korrekturwert ($K_i$) korrigierten Empfangssignale anstehen.

**10.** Vorrichtung nach Anspruch 9, dadurch gekennzeichnet, daß der Quadrierschaltung (150) ein Filter (130) zur Bandbegrenzung vorgeschaltet ist.

**11.** Vorrichtung nach einem der Ansprüche 9 oder 10, dadurch gekennzeichnet, daß die Multiplizierschaltung (140) Zwischenspeicher für Eingangsdaten aufweist.

**12.** Vorrichtung nach einem der Ansprüche 9 bis 11, dadurch gekennzeichnet, daß dem Vorverstärker (110) ein A/D-Wandler (120) nachgeschaltet ist.

**13.** Vorrichtung nach einem der Ansprüche 9 bis 12, dadurch gekennzeichnet, daß die Multiplizierschaltung (140) entfällt und die zweite Verbindung sowie der Korrekturwertrechner (160) an einen Richtungsbildner (200) angeschlossen sind und daß die Korrekturwerte ($K_i$) derart bestimmt werden, daß die Koeffizientenmultiplizierer des Richtungsbildners (200) mit den Korrekturwerten ($K_i$) ansteuerbar sind.

**14.** Vorrichtung nach einem oder mehreren der Ansprüche 9 bis 13, dadurch gekennzeichnet, daß der Korrekturwertrechner (160) eine Schwellwertprüfeinrichtung aufweist, mit der extreme, über einer vorgebbaren Schwelle liegende Korrekturwerte ($K_i$) erkannt und die Empfangssignale der entsprechenden Hydrophone bzw. Staves für die Richtungsbildung gesperrt werden.

Fig. 1

Fig. 2